# EUROPEAN PATENT SPECIFICATION

(11) **EP 4 432 242 B1**
(45) Date of publication and mention of the grant of the patent: **07.10.2026**
(21) Application number: 24161981.6
(22) Date of filing: 07.03.2024
(51) Int. Cl.: G06T 15/20

(54) **INFORMATION PROCESSING APPARATUS AND METHOD, AND PROGRAM**
INFORMATIONSVERARBEITUNGSVORRICHTUNG UND -VERFAHREN SOWIE PROGRAMM
APPAREIL ET PROCÉDÉ DE TRAITEMENT D'INFORMATIONS, ET PROGRAMME

(30) Priority: 13.03.2023 JP 2023038976
(43) Date of publication of application: 18.09.2024
(73) Proprietor: Canon Kabushiki Kaisha, Ohta-Ku Tokyo 1468501 (JP)
(72) Inventor: SHEN, Yangtai, Tokyo, 146-8501 (JP)
(74) Representative: TBK

(56) References cited:
- QIANG YAO ET AL: "Accurate silhouette extraction of multiple moving objects for free viewpoint sports video synthesis", 2015 IEEE 17TH INTERNATIONAL WORKSHOP ON MULTIMEDIA SIGNAL PROCESSING (MMSP), IEEE, 19 October 2015 (2015-10-19), pages 1 - 6, XP032822486, DOI: 10.1109/MMSP.2015.7340803
- ALAHI ALEXANDRE ET AL: "Sport players detection and tracking with a mixed network of planar and omnidirectional cameras", 1 August 2009 (2009-08-01), pages 1 - 8, XP093183366, Retrieved from the Internet <URL:https://ieeexplore.ieee.org/stampPDF/getPDF.jsp?tp=&arnumber=5289406&ref=aHR0cHM6Ly9pZWVleHBsb3JlLmllZWUub3JnL2RvY3VtZW50LzUyODk0MDY=> DOI: 10.1109/ICDSC.2009.5289406
- DELANNAY DAMIEN ET AL: "Detection and recognition of sports(wo)men from multiple views", 1 August 2009 (2009-08-01), pages 1 - 7, XP093183873, Retrieved from the Internet <URL:https://ieeexplore.ieee.org/stampPDF/getPDF.jsp?tp=&arnumber=5289407&ref=aHR0cHM6Ly9pZWVleHBsb3JlLmllZWUub3JnL2RvY3VtZW50LzUyODk0MDc=> DOI: 10.1109/ICDSC.2009.5289407

## Description

### BACKGROUND OF THE INVENTION

### Field of the Invention

The present disclosure relates to an information processing apparatus and method, and a program.

### Description of the Related Art

In recent years, a technology of arranging a plurality of photographing apparatuses to capture an image of an object, estimating a three-dimensional shape of the object using captured images of a plurality of viewpoints obtained, and generating a virtual viewpoint image from an arbitrary virtual viewpoint has attracted attention. According to this technique, a virtual viewpoint image can be generated even when a plurality of objects are present in a photographing space. Thus, the viewer can view the movement of a plurality of objects from an arbitrary viewpoint, and can obtain a sense of presence higher than that of a normal video.

On the other hand, there is also a demand for generating a virtual viewpoint image in which only a specific object in the photographing space is captured. For example, in sports competition, there is a demand for generating a virtual viewpoint video in which a referee or an audience is not shown and only a player is shown. Furthermore, for example, in video production, there is a demand that a plurality of performers simultaneously perform at the time of photographing, and that a video of each performer is generated at the time of generating a virtual viewpoint image.

However, in a technique of generating a general virtual viewpoint image, it is difficult to generate and display only a virtual viewpoint image of a specific object among a plurality of objects. Japanese Patent Laid-Open No. 2019-106170 (hereinafter referred to as Patent Document 1) discloses a technique for preventing a defect from occurring in a three-dimensional shape of an object even when a specific structure blocks the object. According to such a technique, a virtual viewpoint image of only a player can be generated from a captured image in which a specific structure and the player are captured. However, in Patent Document 1, although a virtual viewpoint video can be generated by separating a specific structure and a player from each other, it does not correspond to a process of generating a virtual viewpoint image of only a designated player from the captured image in which a plurality of players are captured. Yao et al., "Accurate silhouette extraction of multiple moving objects for free viewpoint sports video synthesis," IEEE, 2015, propose a method to improve the visual quality of synthesized free-viewpoint sports video.

### SUMMARY OF THE INVENTION

The present invention is defined by the appended independent claims. An aspect of the present disclosure provides a technique for generating a virtual viewpoint image of an object designated as a generation target.

The present invention in its first aspect provides an information processing apparatus as specified in claims 1 to 20.

The present invention in its second aspect provides an information processing method as specified in claims 21.

The present invention in its third aspect provides a program as specified in claims 22.

Further features of the present invention will become apparent from the following description of exemplary embodiments with reference to the attached drawings.

### BRIEF DESCRIPTION OF THE DRAWINGS

FIGS. 1A and 1B are diagrams illustrating examples of a real space in which an object is photographed and a generated virtual viewpoint image.
FIG. 2 is a block diagram illustrating a configuration example of an information processing system according to a first embodiment.
FIGS. 3A to 3D are diagrams schematically illustrating examples of a captured image, a first silhouette image, and a second silhouette image.
FIG. 4A is a flowchart illustrating an object number integrating process according to the first embodiment.
FIG. 4B is a diagram for explaining replenishment of the object number to the voxel.
FIGS. 5A to 5C are diagrams illustrating examples of a user interface of a generation target designating unit according to the first embodiment.
FIG. 6 is a flowchart illustrating a virtual viewpoint image generating process according to the first embodiment.
FIG. 7 is a block diagram illustrating an example of a hardware configuration of an information processing apparatus according to the first embodiment.
FIG. 8 is a block diagram illustrating a configuration example of an information processing system according to a second embodiment.
FIG. 9 is a flowchart illustrating a virtual viewpoint image generating process according to the second embodiment.
FIG. 10 is a block diagram illustrating a configuration example of an information processing system according to a third embodiment.
FIG. 11 is a diagram for explaining a generation target designating unit according to the third embodiment.
FIG. 12 is a flowchart illustrating a virtual viewpoint image generating process according to the third embodiment.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

Note that terms that differ only in the alphabet given after the number in the reference numerals indicate different instances of apparatuses having the same or similar functions.

### First Embodiment

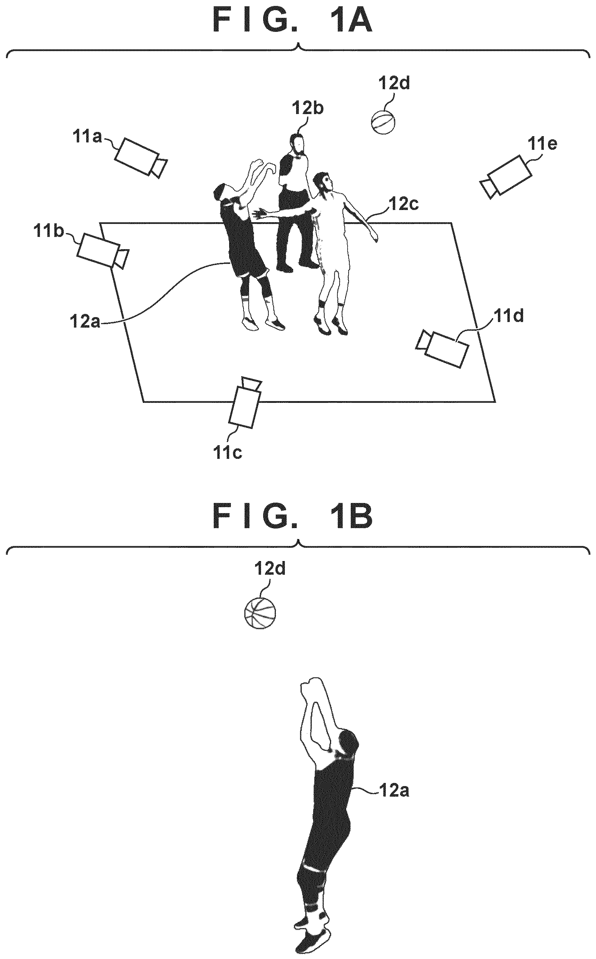

In the first embodiment, an information processing system in which objects 12a to 12d are image-captured by a plurality of cameras 11a to 11e and a virtual viewpoint image of a designated object is generated will be described as illustrated in FIG. 1A. For example, when the objects 12a and 12d are designated as generation targets, the information processing system generates a virtual viewpoint image of only the object 12a and the object 12d of the designation target such as in FIG. 1B.

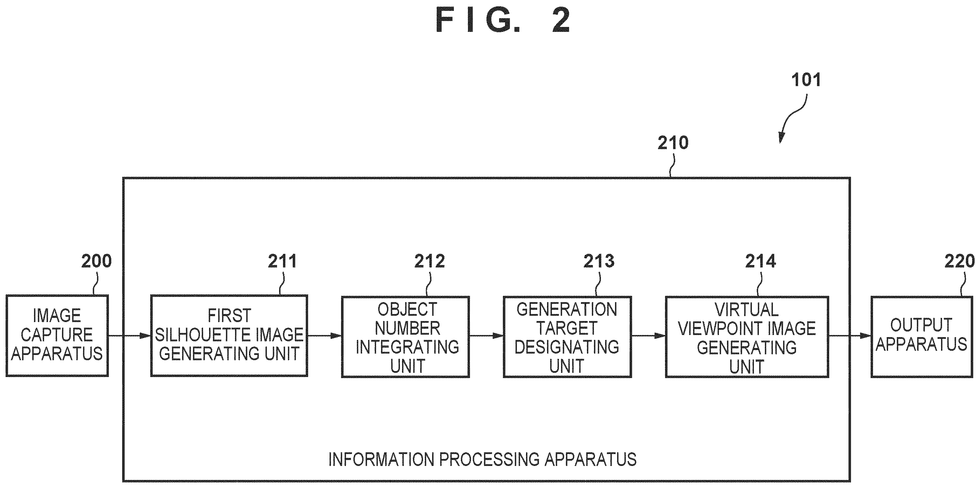

FIG. 2 illustrates a configuration example of the information processing system 101 according to the first embodiment. The information processing system includes an image capture apparatus 200, an information processing apparatus 210, and an output apparatus 220. The information processing apparatus 210 includes functional units of a first silhouette image generating unit 211, an object number integrating unit 212, a generation target designating unit 213, and a virtual viewpoint image generating unit 214. Note that the information processing system 101 may be configured by one information processing apparatus. For example, the image capture apparatus 200 and the output apparatus 220 may be realized by the information processing apparatus 210. Furthermore, the information processing apparatus 210 may be configured by one electronic device or a plurality of electronic devices.

Next, an operation of each configuration of the information processing system 101 will be described. The image capture apparatus 200 includes a plurality of cameras 11a to 11e which are installed so as to surround an object and perform photographing in synchronization with each other. The image capture apparatus 200 assigns a frame number and a time code to a plurality of images captured by the cameras 11a to 11e (hereinafter referred to as a plurality of captured images) and transmits the images to a first silhouette image generating unit 211. Note that the number of cameras included in the image capture apparatus 200 is not particularly limited.

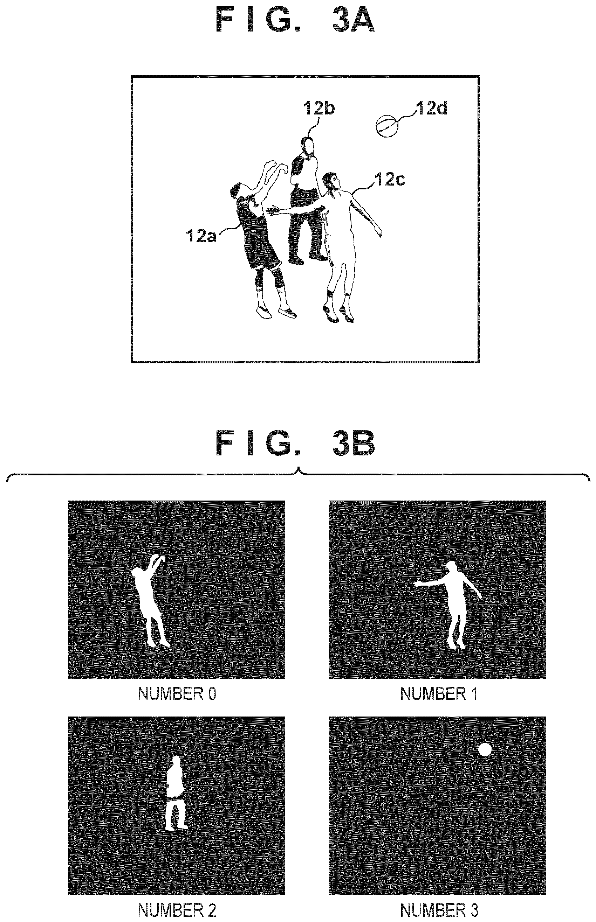

The first silhouette image generating unit 211 generates a silhouette image indicating a region (foreground region) of each of a plurality of objects shown in a plurality of captured images from a plurality of captured images obtained from the image capture apparatus 200. Furthermore, the first silhouette image generating unit 211 generates an object number representing each object for each captured image, and associates the object number with the silhouette image generated from the captured image. For example, when the captured image as illustrated in FIG. 3A is input from the image capture apparatus 200, the first silhouette image generating unit 211 generates the first silhouette image and the object number as illustrated in FIG. 3B. In FIG. 3B, number 0 is assigned to object 12a, number 2 is assigned to object 12b, number 1 is assigned to object 12c, and number 3 is assigned to object 12d. Since the object number is independently assigned for each captured image, the same object number is not necessarily assigned to one object with regards to a plurality of captured images. Furthermore, as in the object 12c and the object 12b numbered 1 and 2 in FIG. 3B, in a case where occlusion occurs due to the anteroposterior relationship of the objects, the occluded region of the object 12b (number 2) behind is not included in the silhouette image of the object 12b. The generated silhouette image of each object and the number of the object are output to the object number integrating unit 212.

Note that any existing technology can be used as a method of generating a silhouette image and a method of assigning an object number. For example, in generation of a silhouette image, well-known instance segmentation can be used to separate a plurality of objects included in a captured image. Furthermore, for example, the object number can be assigned in the order of high probability of becoming the object obtained by the instance segmentation process. Since the first silhouette image generating unit 211 independently processes each of the plurality of captured images, there is a possibility that the same object has different object numbers between the captured images as described above. Therefore, the object number integrating unit 212 determines a correspondence relationship of the objects between the captured images, and associates a silhouette image (object number) with each object of the plurality of objects. Hereinafter, associating a silhouette image (object number) with each object is also referred to as integration.

The object number integrating unit 212 associates (integrates) the plurality of silhouette images generated by the first silhouette image generating unit 211 for each of the plurality of objects, thereby obtaining associating information representing the associated silhouette image for each object. Here, the associating information is a set of silhouette images (object numbers) for each object, and is integrated so that object numbers assigned to the same object among object numbers obtained from each captured image represent the same object. In the present embodiment, the object number integrating unit 212 obtains a three-dimensional shape using a plurality of silhouette images, and associates the plurality of silhouette images for each object based on the position of the projection area when each of the plurality of silhouette images is projected onto the obtained three-dimensional shape.

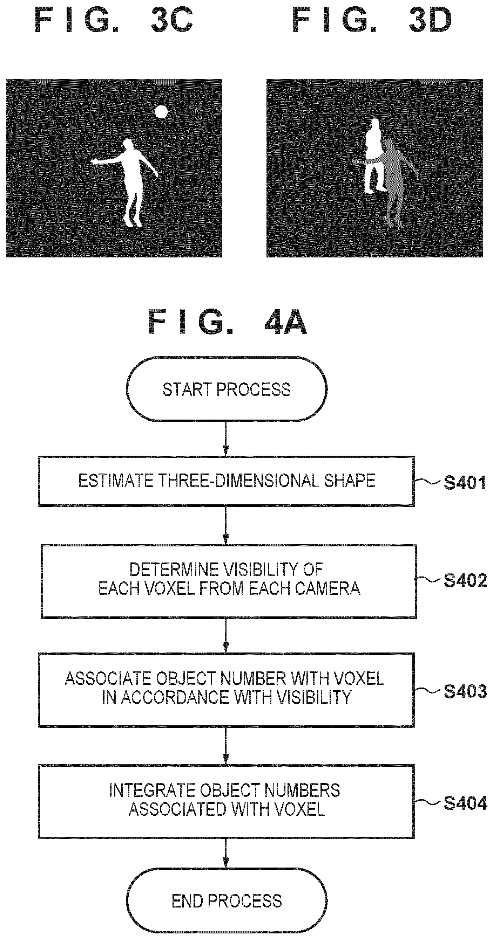

An example of a specific process of the object number integrating unit 212 will be described with reference to a flowchart of FIG. 4A. In S401, the object number integrating unit 212 estimates the three-dimensional shape of the object using the first silhouette image generated by the first silhouette image generating unit 211. Note that the method of estimating the three-dimensional shape is not limited in the present disclosure. For example, a well-known technique such as a volume intersection method or a stereo method can be used. The object number integrating unit 212 estimates a three-dimensional shape using the first silhouette image of each object as it is. However, the result (e.g., a silhouette image of a logical sum of all or any combination of the four first silhouettes numbered 0 to 3 in FIG. 3B) of the logical sum synthesis of the first silhouette image obtained from one captured image may be used for the estimation of the three-dimensional shape. The three-dimensional shape estimation result is a set of elements representing the three-dimensional shape of the photographed object. The element includes a voxel or a point, and for example, the three-dimensional shape of the object is represented by a voxel group or a point group. Note that the spatial resolution of the element (voxel, point, or the like) may be lower than that of the captured image in order to reduce the amount of calculation. Hereinafter, it is assumed that the three-dimensional shape is represented by a voxel group.

In S402, the object number integrating unit 212 determines visibility of each voxel from each camera (also referred to as visibility of each voxel in each captured image) using the first silhouette image and the three-dimensional shape of the object estimated in S401, and obtains visibility information. Here, when the target voxel is not occluded by another object and the target voxel is directly image captured from the camera, the target voxel is determined to be visible from the camera or in the captured image. On the other hand, if the target voxel is not within the angle of view of the captured image or is occluded by another object, it is determined that the target voxel is not visible from the camera or in the captured image. Note that a method of determining the visibility is not particularly limited. For example, occlusion by another object may be determined using distance information of each voxel to be an object obtained from the captured image. Since the distance information can also be used to generate a second silhouette image to be described later, the object number integrating unit 212 stores the obtained distance information together with the first silhouette image.

In S403, the object number integrating unit 212 associates the object number assigned to each voxel in each captured image based on the visibility information obtained in S402. More specifically, the object number integrating unit 212 projects the first silhouette image obtained from the captured image onto the three-dimensional shape estimated in S401, and associates the object number of the first silhouette image with the voxel existing in the projection area and determined to have visibility in the captured image. An object number is not associated with a voxel that does not have visibility or a voxel that is not an object. Through this process, the object number assigned in all the captured images or some of the captured images is associated with the voxel to be the surface of the object. Furthermore, the object number is not associated with a voxel of an object that is not a surface or a voxel that is not an object.

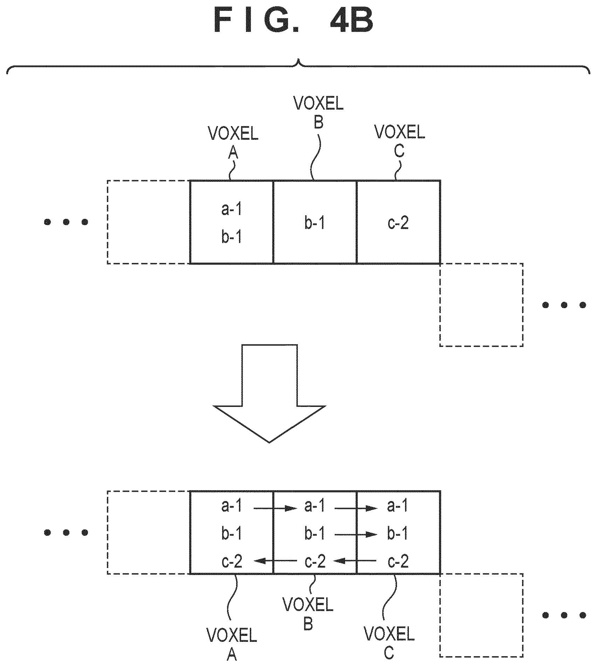

Note that, in the process of associating the object number with the voxel based on the projection area of the first silhouette image, the combination of the associated object numbers may differ among the voxels constituting the same object. In addition, depending on a three-dimensional shape generation method or the like, there may be a voxel to which no object number of the captured image is associated although the voxel is the surface of the object. For example, the upper part of FIG. 4B schematically illustrates a state in which object numbers are associated with voxels A to C of a certain object. Object number 1(a -1) in a captured image a, object number 1(b -1) in a captured image b, and an object number 2(c -2) in a captured image c are associated with voxels A, B, and C, respectively. Here, it is assumed that the voxel C is a portion visible only in the captured image c, and only the voxel C is visible in the captured image c. In this case, c-2 cannot be associated with a-1 and b-1. Therefore, as illustrated in the lower part of FIG. 4B, the object number associated with the voxel is supplemented based on the object number associated with the neighboring or adjacent voxel (e.g., the closest voxel). Through this process, the object numbers a-1, b-1, and c-2 obtained from the plurality of captured images are integrated as representing the same object.

In S404, the object number integrating unit 212 associates the object numbers, assuming that the object numbers assigned to one voxel represent the same object. This determination is performed on all the voxels, and object numbers are associated for each object to obtain associating information representing a set of object numbers associated for each object. For example, in the case illustrated in the lower part of FIG. 4B, a-1, b-1, and c-2 are associated as object numbers representing the same object, and associating information representing a set of object numbers of a-1, b-1, and c-2 is obtained. Thus, for example, when an object corresponding to a-1 is selected, three first silhouette images corresponding to a-1, b-1, and c-2 are specified. Note that voxels having different combinations of object numbers may appear in voxels of the same object due to, for example, another object being adjacent. For example, a -2, b -1, and c - 2 may exist in addition to the combination illustrated in FIG. 4B. However, in general, the number of voxels to which a correct combination of object numbers is assigned to one object is larger than the number of voxels to which an incorrect combination is assigned. Therefore, the object numbers can be correctly integrated by integrating the combinations of the object numbers assigned to the voxels using the majority decision. Through the above process, it is possible to know the object number of the object represented by the object number in a certain captured image in another captured image.

Note that a unique object identification number may be assigned to one object represented by the associated object number. Furthermore, at the time of integration, the object numbers may be integrated using the object identification numbers of the past frames by tracking the object. More specifically, first, the object numbers are integrated for each frame, and the correspondence between the object and the object identification number is determined. Next, a state of overlap between objects in the previous frame and the current frame is detected, and objects having many overlaps are determined as the same object. The same object identification number is inherited to the same object between frames by assigning the object identification number of the previous frame to the object of the current frame determined to be the same object. As a result, in a case where the same object is set as the generation target over a plurality of frames, a generation target designating unit 213 does not need to designate the generation target for each frame.

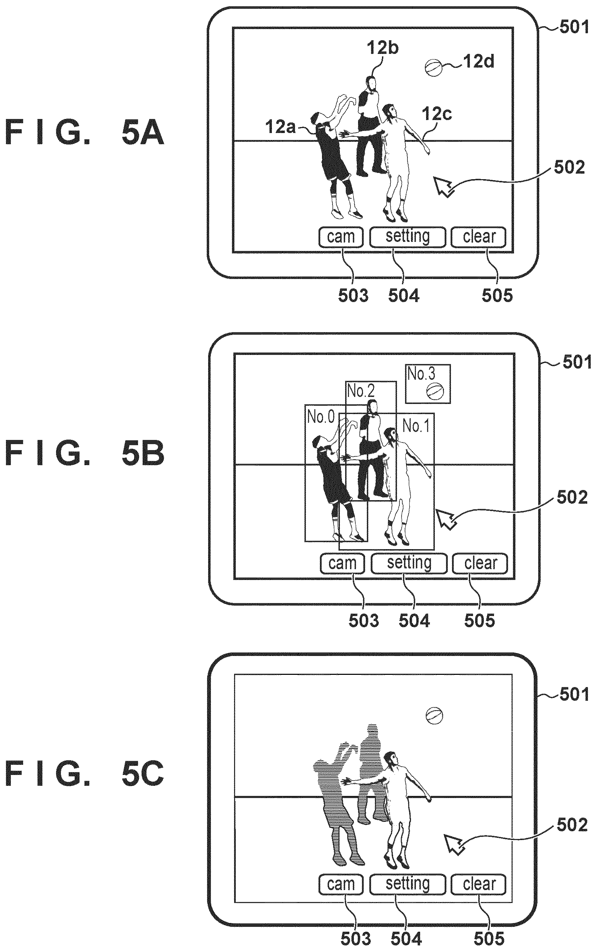

Returning to FIG. 2, the generation target designating unit 213 displays the captured image or the virtual viewpoint image of the past frame, and accepts an external input for designating a generation target or an object that is not the generation target. The generation target designating unit 213 obtains the object number of the object designated as the generation target, and outputs the object number to the virtual viewpoint image generating unit 214. For example, the generation target designating unit 213 provides the user with a user interface of a display screen as illustrated in FIG. 5A, and accepts a user operation for designating a generation target. That is, the generation target designating unit 213 displays the captured image (or the virtual viewpoint image generated in the past frame) on the display device 501, and accepts designation of the object by the user operation. Note that, as illustrated in FIG. 5B, the object number (or the object identification number) may be displayed on the object existing in the display screen. Furthermore, in order to distinguish between the object of the current generation target and the object that is not the generation target, the appearance of the object that is not the generation target may be made different from that of the object of the generation target. For example, as illustrated in FIG. 5C, an object that is not a generation target using the first silhouette image may be filled with, for example, a horizontal line pattern according to the setting of the appearance of the object that is not a generation target. In a case where the virtual viewpoint image is displayed on the user interface, the object of the generation target and the object that is not the generation target may be displayed in an identifiable manner. For example, an object that is not a generation target may be displayed translucently or transparently by setting transparency to an object that is not a generation target. The virtual viewpoint image to be displayed on the display device 501 can be generated, for example, by the virtual viewpoint image generating unit 214 (described later).

The designation of the generation target is performed by designating an object for which the virtual viewpoint image is to be generated or an object for which the virtual viewpoint image is not to be generated with an operation of a cursor 502 and a click operation by a mouse (not illustrated) on the display screen of the display device 501. Note that the user operation for designating the object may be a touch operation on the touch panel. The object designated by the user operation can be determined by determining to which object number silhouette of the first silhouette image the designated region belongs. For example, in a case where the regions of the object 12a and the object 12b are designated among the objects 12a to 12d present in the display image, the object 12a and the object 12b are determined to be not the generation targets, and the object 12c and the object 12d are determined to be the generation targets. The generation target designating unit 213 does not output the object number of the object (object that is not the generation target) designated by the designating operation to the virtual viewpoint image generating unit 214, and outputs the object number of the object that is not designated to the virtual viewpoint image generating unit 214. Note that, although the case where the designated object is excluded from the generation target has been described above, in a case where the designated object is set as the generation target, the designated objects 12a and 12b are set as the generation targets.

A camera button 503 is used to switch a captured image displayed on the user interface. For example, when the camera button 503 is operated, a user interface for inputting the number of the photographed image (or the number of the camera) is displayed. When the user designates the number of the captured image (or camera) in the user interface, the displayed captured image is switched. Note that the switching of the image by the camera button 503 may include a virtual viewpoint image. A setting button 504 is used to set the appearance of an object that is not a generation target. For example, when the setting button 504 is operated, a user interface for the user to input a value of transparency is provided.

When a clear button 505 is operated, the designating operation on the object is canceled. When the clear button 505 is operated, the generation target designating unit 213 designates all the objects as generation targets, and outputs the object numbers of all the objects to the virtual viewpoint image generating unit 214. Furthermore, for example, a user interface for inputting the object number in response to the operation of the clear button 505 may be provided, and the designated state of the object with the input object number may be released. This makes it possible to individually cancel the selection of the object. Unless the designated state of the object is canceled by the clear button 505, the designated state of the object designated in the current frame may be maintained in another frame.

Returning to FIG. 2, the virtual viewpoint image generating unit 214 generates the virtual viewpoint image of the object designated as the generation target based on the associating information corresponding to the object designated as the generation target from the plurality of objects by the generation target designating unit 213 and the designated virtual viewpoint. Furthermore, the virtual viewpoint image generating unit 214 generates a virtual viewpoint image to be displayed on the display device 501 by the generation target designating unit 213.

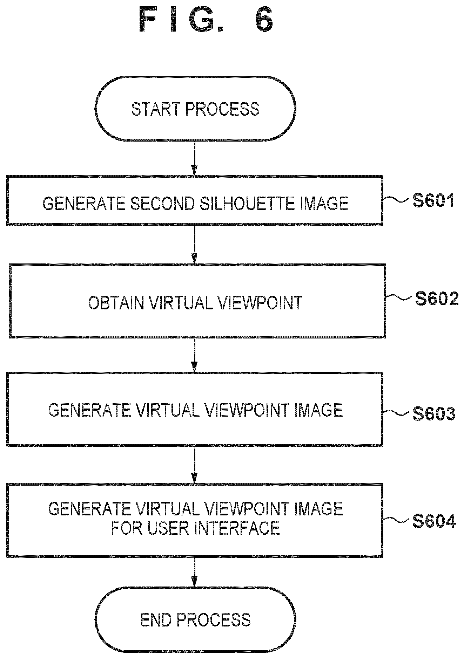

The operation of the virtual viewpoint image generating unit 214 will be described in more detail with reference to the flowchart of FIG. 6. In S601, the virtual viewpoint image generating unit 214 generates the second silhouette image in which only the generation target exists, using the first silhouette image and the object number designated by the generation target designating unit 213. For example, assumed that the first silhouette image of FIG. 3B and the object number are obtained for the captured image of FIG. 3A, and number 1 (object 12c) and number 3 (object 12d) are designated as the generation targets by the generation target designating unit 213. In this case, as illustrated in FIG. 3C, the second silhouette image is generated by performing logical sum synthesis of the first silhouette images of number 1 and number 3.

Furthermore, when an object that is not a generation target is present in front of the generation target, the object can be an object (occlusion object) that occludes the generation target. There is a possibility that the generation of the virtual viewpoint image is adversely affected by the presence of the occlusion object. Therefore, another object in front of the generation target and within a certain range from the object of generation target is determined as the occlusion object. The first silhouette image of the object determined as the occlusion object is taken into the second silhouette image so as to indicate that it is the occlusion object. For example, in a case where the silhouette image of an object of a generation target and the silhouette image of another object are in contact with each other, or in a case where the distance between the closest pixels of the silhouette images is within a certain threshold value, it is determined that the other object is an occlusion object. For example, in a case where number 2 in FIG. 3B is an object of a generation target, objects of numbers 0, 1, and 3 are present. Here, for example, in a case where the occlusion object is determined by the contact of the silhouette image, the object of number 1 in contact with the first silhouette image of the object of number 2 is determined as the occlusion object. FIG. 3D illustrates the second silhouette image generated in this case, in which the silhouette region of the object of number 1 serving as the occlusion object and the silhouette region of the object of number 2 serving as the generation target are generated in a distinguishable manner. For example, the silhouette region of the object of number 1 serving as the occlusion object has a value different from that of the silhouette region of the object of number 2 serving as a generation target.

In S602, the virtual viewpoint image generating unit 214 obtains information of the virtual viewpoint for generating the virtual viewpoint image. The information of the virtual viewpoint is optical information such as at least a camera position attitude and an angle of view of the virtual viewpoint. The information of the virtual viewpoint is associated with a frame number or a time code given to the captured image. The information of the virtual viewpoint can be generated by an operation of an input device such as a mouse or a keyboard. Alternatively, information of temporally continuous virtual viewpoints generated in advance may be obtained from the storage device.

In S603, the virtual viewpoint image generating unit 214 generates a virtual viewpoint image of the object designated as the generation target from the virtual viewpoint obtained in S602 based on the captured image and the information on the silhouette region and the occlusion region of the second silhouette image generated in S601. Note that in the present disclosure, a method for generating a virtual viewpoint image is not limited. For example, there is a method of performing shape estimation using the second silhouette image and rendering the appearance of the virtual viewpoint based on color information. In addition, a generation target may be cut out from the captured image using the second silhouette image, and a three-dimensional space may be reproduced and rendered using a Neural Radiance Fields (NeRF) method which is deep learning. The virtual viewpoint image generating unit 214 outputs the virtual viewpoint image of the generation target to the output apparatus 220. At this time, the virtual viewpoint image generating unit 214 also generates a virtual viewpoint image in which all the objects are set as generation targets using the first silhouette image for the process of S604. When the occlusion region is included, it is generated with a transparency set in advance. Furthermore, in a case where the second silhouette image generated in S601 includes the silhouette region (information of the occlusion region) of the object (occlusion object) in the occlusion relationship as illustrated in FIG. 3D, the virtual viewpoint image generating unit 214 may generate the virtual viewpoint image distinguishably between the occlusion object and the object of generation target. For example, the virtual viewpoint image of the object in the occlusion relationship may be generated with a transparency different from transparency of the virtual viewpoint image of the object of generation target.

In S604, the virtual viewpoint image generating unit 214 detects a difference between the virtual viewpoint image of the generation target generated in S603 and the virtual viewpoint images of all objects, and generates a virtual viewpoint image to be displayed by the generation target designating unit 213 in accordance with the setting of the appearance of an object that is not the generation target. For example, the virtual viewpoint image of the generation target and the virtual viewpoint image of the difference are combined (alpha-blended) according to the setting of the transparency of the object that is not the generation target. Note that this process is an example of a process of displaying the virtual viewpoint image of the object of the generation target and the virtual viewpoint image of the object that is not the generation target in a distinguishable manner. Note that when the virtual viewpoint image of the past frame is not displayed in the generation target designating unit 213, the generation of the virtual viewpoint image in which all the objects are set as the generation targets in S603 and the process in S604 may be omitted.

Returning to FIG. 2, the output apparatus 220 displays the virtual viewpoint image generated by the virtual viewpoint image generating unit 214 on a display device such as a display or transmits the virtual viewpoint image to an accumulation device such as a server.

Note that in the above description, one virtual viewpoint is assumed, but the present invention is not limited thereto, and the present embodiment can also be applied to a plurality of virtual viewpoints. For example, it is possible to respond by using a plurality of virtual viewpoint image generating units 214.

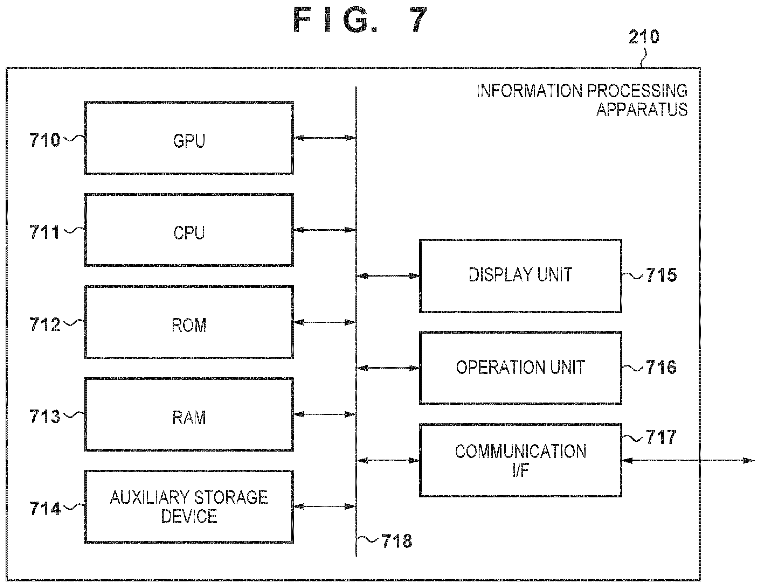

A hardware configuration of the information processing apparatus 210 for realizing the above functions will be described with reference to FIG. 7. The information processing apparatus 210 includes a calculation unit for performing image processing and three-dimensional shape generation, the calculation unit including a graphics processing unit (GPU) 710 and a central processing unit (CPU) 711. Furthermore, the information processing apparatus 1 includes a storage unit with a read only memory (ROM) 712, a random access memory (RAM) 713, and an auxiliary storage device 714. The information processing apparatus 1 further includes a display unit 715, an operation unit 716, a communication I/F 717, and a bus 718.

The CPU 711 realizes each functional unit of the information processing apparatus 210 by controlling the entire video generation apparatus using computer programs and data stored in the ROM 712 and the RAM 713. The CPU 711 also operates as a display control unit that controls the display unit 715 and an operation control unit that controls the operation unit 716. The GPU 710 can perform efficient calculation by processing more data in parallel. Therefore, in the first embodiment, the GPU 710 is used in addition to the CPU 711 to realize the first silhouette image generating unit 211, the object number integrating unit 212, the generation target designating unit 213, and the virtual viewpoint image generating unit 214. In a case where the program is executed, the calculation may be performed by only one of the CPU 711 and the GPU 710, or the CPU 711 and the GPU 710 may perform the calculation in cooperation with each other. Note that the information processing apparatus 210 includes one or a plurality of dedicated hardware different from the CPU 711, and the dedicated hardware may execute at least a portion of a process to be executed by the CPU 711. Examples of the dedicated hardware include an application specific integrated circuit (ASIC), a field programmable gate array (FPGA), and a digital signal processor (DSP).

The ROM 712 stores a program or the like that is not required to be changed. The RAM 713 temporarily stores a program or data supplied from the auxiliary storage device 714, and data or the like externally supplied via the communication I/F 717. The auxiliary storage device 714 is configured by, for example a hard disk drive or the like, and stores various types of data such as image data and audio data.

The display unit 715 is configured by, for example, a liquid crystal display, an LED, or the like, and displays a graphical user interface (GUI) or the like for a user to operate the information processing apparatus 210. For example, the display unit 715 includes a display device 501, and can provide the user interface described with reference to FIGS. 5A to 5C. The operation unit 716 is configured by, for example, a keyboard or a mouse, a joy stick, a touch panel, or the like, and inputs various instructions to the CPU 711 when receiving a user operation.

The communication I/F 717 is used for communication with a device outside the video generation apparatus. For instance, in a case where the video generation apparatus is in wired connection with an external device, a cable for communication is connected to the communication I/F 717. In a case where the video generation apparatus has a function of wirelessly communicating with an external device, the communication I/F 717 includes an antenna. The bus 718 connects the respective units of the video generation apparatus to transmit information.

As described above, according to the first embodiment, the generation target of the virtual viewpoint image can be freely designated, and the virtual viewpoint image of the generation target can be generated without being restricted in terms of the position, posture, and occlusion state between the object that is the generation target and the object that is not the generation target. Furthermore, according to the first embodiment, with the function of tracking the object, the generation of the virtual viewpoint image of the generation target can be automatically continued even if the generation target moves to an arbitrary position in the moving image.

### Second Embodiment

Generation of the virtual viewpoint image requires processing of a plurality of captured images, and in particular, in a case where a plurality of objects are designated as generation targets, this may be a time-consuming process. In the second embodiment, in a case where there are a plurality of objects to be the generation target, the processing speed is increased by executing generation of a plurality of virtual viewpoint images in parallel. More specifically, in the second embodiment, a virtual viewpoint image is independently generated for each designated generation target, and the generated virtual viewpoint images are combined based on distance information from the virtual viewpoint to each object, thereby obtaining a virtual viewpoint image of the generation target.

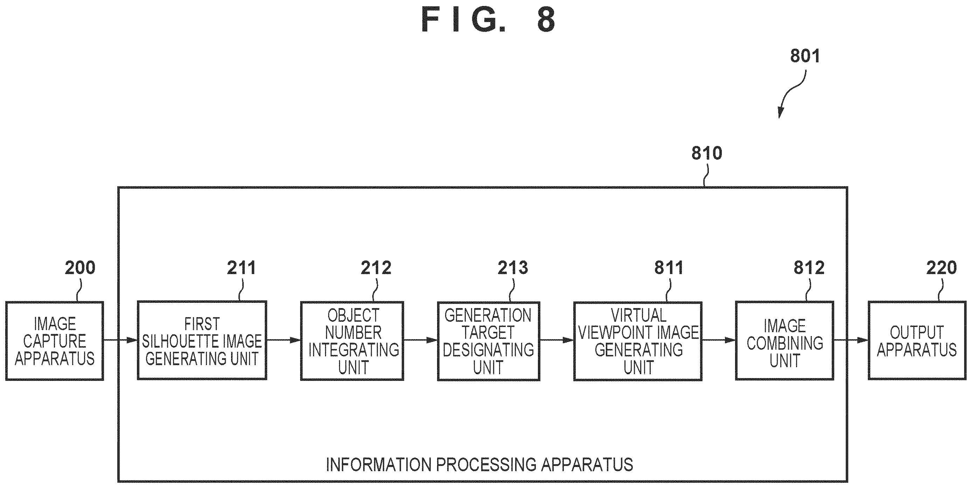

The functional configuration of the information processing apparatus 810 in the information processing system 801 according to the second embodiment will be described with reference to FIG. 8. In FIG. 8, functional components having the same functions as those of the first embodiment are denoted by the same reference numerals, and differences between the second embodiment and the first embodiment will be mainly described. Note that the information processing system 801 may be configured by one information processing apparatus. For example, the image capture apparatus 200 and the output apparatus 220 may be implemented by the information processing apparatus 810. Furthermore, the information processing apparatus 810 may be configured by one electronic device or may be configured by a plurality of electronic devices. Furthermore, the information processing apparatus 810 according to the second embodiment can be implemented by the same hardware configuration as that of the first embodiment (FIG. 7).

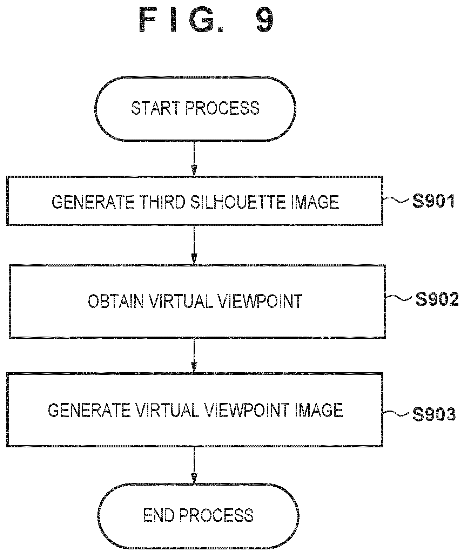

Operations of the virtual viewpoint image generating unit 811 and the image combining unit 812 according to the second embodiment will be described with reference to a flowchart of FIG. 9. In S901, the virtual viewpoint image generating unit 811 generates a third silhouette image in which only one generation target exists, using the first silhouette image and the object number designated by the generation target designating unit 213. In the first embodiment described above, in a case where a plurality of objects are designated as generation targets, one second silhouette image in which the plurality of objects exist is generated. On the other hand, in the second embodiment, a plurality of third silhouette images in which only one object exists are generated. A method of generating the third silhouette image is the same as that of generating the second silhouette image according to the first embodiment except that the logical sum synthesis is not performed on the silhouette images of the plurality of objects. For example, in a case where the objects 12c and 12d in FIG. 3A are designated as generation targets, the silhouette images of number 1 and number 3 in FIG. 3B are used as the third silhouette images. In addition, when the object 12b is included in the generation target, the third silhouette image of the object 12b is as shown in FIG. 3D.

In S902, the virtual viewpoint image generating unit 811 obtains the virtual viewpoint. The acquisition of the virtual viewpoint in S902 is the same process as in the first embodiment (S602 in FIG. 6). In S903, the virtual viewpoint image generating unit 811 generates a virtual viewpoint image of each object to be the generation target using the third silhouette image generated in S901. The method for generating a virtual viewpoint image is the same as the method for generating a virtual viewpoint image by the virtual viewpoint image generating unit 214 of the first embodiment (S603 in FIG. 6). At this time, the virtual viewpoint image generating unit 811 estimates distance information from the virtual viewpoint to each object to be the generation target. A method of estimating the distance information includes, for example, a method of calculating the distance using the three-dimensional shape estimated at the time of generating the virtual viewpoint image. Through the above processes, a virtual viewpoint image in which only one object to be the generation target exists and distance information from the virtual viewpoint to the object are generated for a plurality of generation targets. The virtual viewpoint image generating unit 811 outputs the plurality of virtual viewpoint images generated for the plurality of generation targets to the image combining unit 812. Note that, as in the processes of S603 and S604 of the first embodiment, a process of combining a difference between a virtual viewpoint image having all objects as generation targets and a virtual viewpoint image of the generation target with a virtual viewpoint image of the generation target may be performed.

The image combining unit 812 combines the plurality of virtual viewpoint images generated by the virtual viewpoint image generating unit 811 into one virtual viewpoint image based on the anteroposterior relationship between the videos determined according to the distance to the virtual viewpoint of each object.

According to the second embodiment, the processes of S901 and S903 of the virtual viewpoint image generating unit 811 can be executed in parallel for a plurality of objects. Therefore, in the second embodiment, when a plurality of generation targets are designated, a virtual viewpoint image can be generated at a higher speed than in the first embodiment.

### Third Embodiment

In the third embodiment, a virtual viewpoint image is generated at high speed by deleting a voxel that is not a generation target from a three-dimensional shape estimated at the time of integrating object numbers. In addition, in sports competition, there are objects that always exist in the photographing region, such as players and referees, and there are also objects that enter the photographing region for a moment, such as staff members and spectators. In the third embodiment, the number of an object present in a specific region in a photographing region at a certain moment is recorded and is always set as a generation target.

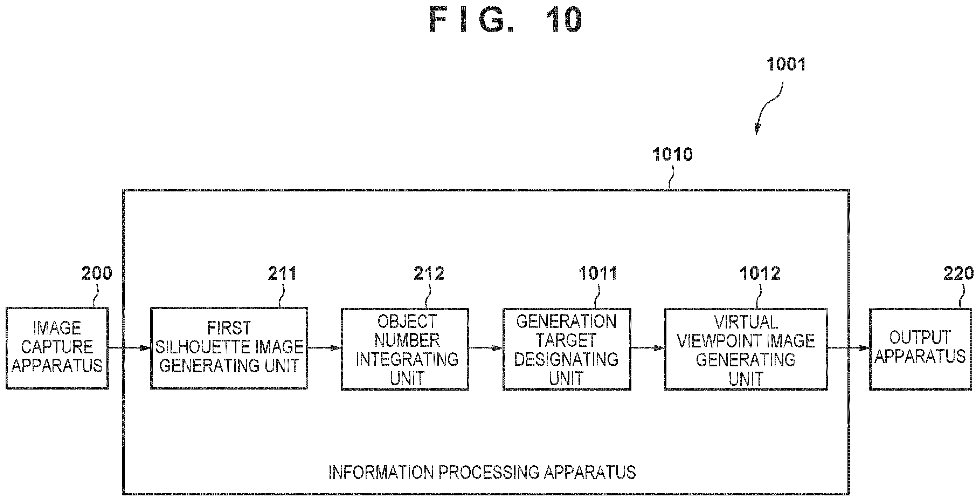

FIG. 10 is a block diagram illustrating a configuration example of an information processing system 1001 according to a third embodiment. In the third embodiment, the generation target designating unit 1011 and the virtual viewpoint image generating unit 1012 in the information processing apparatus 1010 are main changes from the first embodiment. Hereinafter, differences from the first embodiment will be mainly described. Note that the information processing system 1001 may be configured by one information processing apparatus. For example, the image capture apparatus 200 and the output apparatus 220 may be realized by the information processing apparatus 1010. Furthermore, the information processing apparatus 1010 may be configured by one electronic device or may be configured by a plurality of electronic devices. Furthermore, the information processing apparatus 1010 according to the third embodiment can be implemented by the same hardware configuration as that of the first embodiment (FIG. 7).

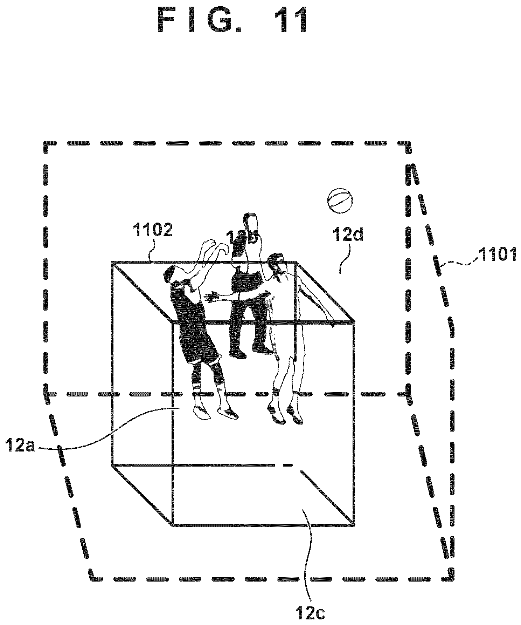

FIG. 11 is a diagram explaining a method of designating a generation target according to the third embodiment. The generation target designating unit 1011 records the number of the object in the specific region 1102 and outputs the number to the virtual viewpoint image generating unit 1012 as a generation target. For example, as illustrated in FIG. 11, it is assumed that the objects 12a to 12d exist at a certain time in the photographing region 1101, and the object 12a and the object 12c exist in the specific region 1102 at a predetermined time. In this case, the generation target designating unit 1011 records the object identification numbers of the objects 12a and 12c existing in the specific region 1102 at a predetermined time, and outputs the objects 12a and 12c as generation targets to the virtual viewpoint image generating unit 1012 until an instruction to change the generation targets is given.

The object number integrating unit 212 integrates so that the same object has the same object identification number with respect to the time axis. That is, the same object identification number is assigned to objects tracked as the same object. The tracking of the object is as described in the first embodiment. By tracking the object, the recorded object identification number is treated as a generation target even if the object does not exist in the specific region 1102 as long as the object is in the photographing region 1101. In addition, an object number of an object which is not recorded at the predetermined time (an object which exists outside the specific region 1102 at the predetermined time) or an object which newly appeared in the photographing region 1101 after the predetermined time is not treated as a generation target. Note that the predetermined time may be designated by any method such as designation by a user operation, designation by an external input, designation by a time code, a frame number, or the like determined in advance.

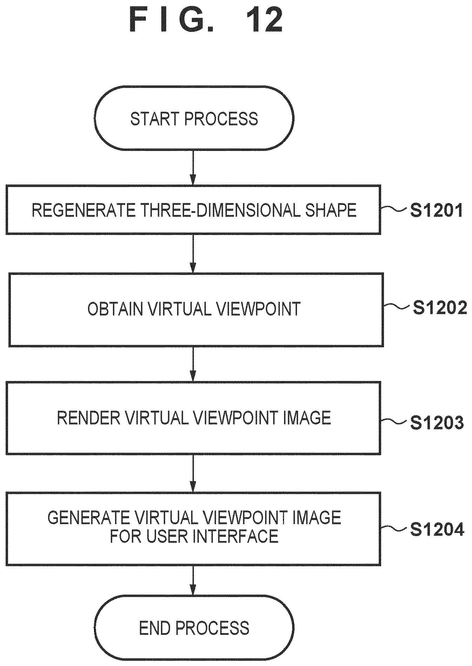

The virtual viewpoint image generating unit 1012 generates a virtual viewpoint image of a generation target using the three-dimensional shape estimated by the object number integrating unit 212. FIG. 12 is a flowchart illustrating a process by the virtual viewpoint image generating unit 1012 of the third embodiment. The processes of S 1202 and S 1204 are the same as the processes of S602 and S604 of the first embodiment (FIG. 6).

In S1201, the virtual viewpoint image generating unit 1012 regenerates the three-dimensional shape from the three-dimensional shape estimated by the object number integrating unit 212 such that only the three-dimensional shape of the object to be the generation target remains. The object number integrating unit 212 associates an object number with each voxel representing a three-dimensional shape. Therefore, the virtual viewpoint image generating unit 1012 generates the three-dimensional shape of the generation target by leaving the voxel in which the object number of the generation target is stored and deleting the voxel in which the object number of the generation target is not stored. In S1203, the virtual viewpoint image generating unit 1012 renders the virtual viewpoint image of the generation target to be viewed from the virtual viewpoint based on the three-dimensional shape regenerated in S 1201 and the color information obtained from the captured image.

According to the third embodiment, since an object determined as a generation target at a predetermined time always becomes the generation target, designation of a generation target does not need to be repeated, which is convenient. In addition, since the virtual viewpoint image generating unit 1012 regenerates and uses the three-dimensional shape generated by the object number integrating unit 212 to generate the virtual viewpoint image, the processing speed can be increased.

As described above, according to each of the above-described embodiments, a virtual viewpoint image of the generation target can be generated without restricting the object position, posture, and occlusion state. Therefore, in the generation of the virtual viewpoint image, the generation target of the virtual viewpoint image can be flexibly designated, and the degree of freedom in the generation of the virtual viewpoint image is improved.

According to the present disclosure, a virtual viewpoint image of an object designated as a generation target can be generated.

### (Other Embodiments)

In the above-described embodiment, the object number integrating unit 212 determines the visibility from each camera by the three-dimensional shape and integrates the object numbers, but determination may be made by other means. For example, a depth sensor installed at the same position as each image apparatus may be used to determine the visibility by obtaining the distance of the surface from each camera and integrate the object numbers.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
An information processing apparatus generates, from a plurality of captured images obtained by a plurality of cameras, a plurality of silhouette images representing respective regions of a plurality of objects appearing in the plurality of captured images, obtains associating information representing a silhouette image associated with each object by associating the plurality of silhouette images with each object of the plurality of obj ects, and generates, based on the associating information corresponding to an object designated from the plurality of objects and a designated virtual viewpoint, a virtual viewpoint image of the designated object.

## Claims

1. An information processing apparatus comprising:
a first generating means (211) for generating, from a plurality of captured images obtained by a plurality of cameras, a plurality of silhouette images representing respective regions of a plurality of objects appearing in the plurality of captured images;
an obtaining means (212, S401-S404) for obtaining, for each object, associating information representing a silhouette image corresponding to that object by associating the plurality of silhouette images with their object of the plurality of objects; and
a second generating means (214, S601-S604) for generating a virtual viewpoint image of an object designated from the plurality of objects, based on the associating information corresponding to the designated object and a designated virtual viewpoint.

2. The information processing apparatus according to claim 1, wherein
the obtaining means,
obtains a three-dimensional shape using the plurality of silhouette images, and
performs association for each object of the plurality of silhouette images based on a projection area obtained when each of the plurality of silhouette images is projected onto the three-dimensional shape.

3. The information processing apparatus according to claim 2, wherein the obtaining means associates a silhouette image with an element present in the projection area of the silhouette image among a plurality of elements constituting the three-dimensional shape, and performs the association of the silhouette images based on a result of the association of the silhouette image in each of the plurality of elements.

4. The information processing apparatus according to claim 3, wherein
the obtaining means:
determines, for the plurality of elements, visibility from the plurality of cameras, and
associates a silhouette image obtained from a captured image obtained by a camera in which the element is determined to be visible with the element.

5. The information processing apparatus according to claim 3 or 4, wherein the obtaining means supplements the association between the element and the silhouette image based on association of a silhouette image in an element adjacent to the element.

6. The information processing apparatus according to any one of claims 1 to 5, wherein the second generating means obtains a three-dimensional shape of the designated object using a silhouette image associated by the associating information corresponding to the designated object, and generates the virtual viewpoint image of the designated object based on the obtained three-dimensional shape.

7. The information processing apparatus according to claim 6, wherein the second generating means,
performs, when the designated object is two or more objects, logical sum synthesis of silhouette images corresponding to the two or more objects for each captured image, and
generates the virtual viewpoint image using the silhouette image obtained by the logical sum synthesis.

8. The information processing apparatus according to claim 6 or 7, wherein
the second generating means,
combines a silhouette image of the designated object and a silhouette image of an object in an occlusion relationship with the designated object in a distinguishable manner, and
generates the virtual viewpoint image using the combined silhouette image.

9. The information processing apparatus according to claim 8, wherein the virtual viewpoint image generated from the silhouette image of the object in the occlusion relationship is generated with a brightness different from the virtual viewpoint image generated from the silhouette image of the designated object.

10. The information processing apparatus according to claim 6, wherein
the second generating means
generates, when the designated object is two or more objects, virtual viewpoint images of the two or more objects using silhouette images of the two or more objects, respectively; and
combines the virtual viewpoint images of each of the two or more objects based on a distance between the designated virtual viewpoint and each of the two or more objects.

11. The information processing apparatus according to any one of claims 3 to 5, wherein the second generating means generates the virtual viewpoint image of the designated object based on a three-dimensional shape obtained by deleting an element not associated with the silhouette image associated with the designated object by the associating information from a plurality of elements constituting the three-dimensional shape generated based on the plurality of silhouette images.

12. The information processing apparatus according to any one of claims 1 to 11, further comprising a combining means (214, S604) for distinguishably combining a virtual viewpoint image of the designated object and differences between all virtual viewpoint images of the plurality of objects obtained using the plurality of silhouette images and the virtual viewpoint image of the designated object.

13. The information processing apparatus according to any one of claims 1 to 12, wherein the first generating means separates a region for each object in each of the plurality of captured images, and generates the silhouette image based on the separated region of the object.

14. The information processing apparatus according to claim 13, wherein the first generating means separates a region for each object in each of the plurality of captured images by instance segmentation.

15. The information processing apparatus according to any one of claims 1 to 14, further comprising a designating means (213) for designating an object as a generation target of the virtual viewpoint image from among the plurality of objects in accordance with a user operation.

16. The information processing apparatus according to claim 15, wherein the designating means determines an object of the generation target based on a position designated by the user operation on a display screen that displays one captured image of the plurality of captured images.

17. The information processing apparatus according to claim 15, wherein the designating means determines an object of the generation target based on a position designated by the user operation on a display screen that displays a virtual viewpoint image generated by the second generating means.

18. The information processing apparatus according to claim 17, wherein a difference between a virtual viewpoint image including all of the plurality of objects and a virtual viewpoint image of the object of the generation target, and the virtual viewpoint image of the object of the generation target displayed on the display screen in an identifiable manner.

19. The information processing apparatus according to claim 15, wherein the designating means determines, as an object of the generation target, an object present at a predetermined time in a specific region designated by the user operation in photographing regions of the plurality of cameras.

20. The information processing apparatus according to any one of claims 15 to 19, wherein the designating means maintains a designated state of the object by tracking the object designated by the user operation.

21. An information processing method comprising:
generating (211), from a plurality of captured images obtained by a plurality of cameras, a plurality of silhouette images representing respective regions of a plurality of objects appearing in the plurality of captured images;
obtaining (S401-S404), for each object, associating information representing a silhouette image corresponding to that object by associating the plurality of silhouette images with their corresponding object of the plurality of objects; and
generating (S601-S604) a virtual viewpoint image of an object designated from the plurality of objects, based on the associating information corresponding to the designated object and a designated virtual viewpoint.

22. A computer program comprising instructions which, when the program is executed by a computer, cause the computer to execute the information processing method according to claim 21.

## Patentansprüche

1. Informationsverarbeitungsvorrichtung, umfassend:
eine erste Erzeugungseinrichtung (211) zum Erzeugen, aus einer Vielzahl von aufgenommenen Bildern, die durch eine Vielzahl von Kameras erhalten werden, einer Vielzahl von Silhouettenbildern, die jeweilige Bereiche einer Vielzahl von Objekten, die in der Vielzahl von aufgenommenen Bildern erscheinen, darstellen;
eine Erhalteeinrichtung (212, S401-S404) zum Erhalten, für jedes Objekt, von Zuordnungsinformationen, die ein diesem Objekt entsprechendes Silhouettenbild darstellen, durch Zuordnen der Vielzahl von Silhouettenbildern zu ihrem Objekt der Vielzahl von Objekten; und
eine zweite Erzeugungseinrichtung (214, S601-S604) zum Erzeugen eines virtuellen Blickpunktbildes eines aus der Vielzahl von Objekten bestimmten Objekts, basierend auf den dem bestimmten Objekt entsprechenden Zuordnungsinformationen und einem bestimmten virtuellen Blickpunkt.

2. Informationsverarbeitungsvorrichtung nach Anspruch 1, wobei die Erhalteeinrichtung
eine dreidimensionale Form unter Verwendung der Vielzahl von Silhouettenbildern erhält, und
eine Zuordnung für jedes Objekt der Vielzahl von Silhouettenbildern basierend auf einem Projektionsbereich, der erhalten wird, wenn jedes der Vielzahl von Silhouettenbildern auf die dreidimensionale Form projiziert wird, durchführt.

3. Informationsverarbeitungsvorrichtung nach Anspruch 2, wobei die Erhalteeinrichtung einem Element, das unter einer Vielzahl von Elementen, die die dreidimensionale Form bilden, in dem Projektionsbereich des Silhouettenbildes vorhanden ist, ein Silhouettenbild zuordnet, und die Zuordnung der Silhouettenbilder basierend auf einem Ergebnis der Zuordnung des Silhouettenbildes in jedem der Vielzahl von Elementen durchführt.

4. Informationsverarbeitungsvorrichtung nach Anspruch 3, wobei die Erhalteeinrichtung:
für die Vielzahl von Elementen eine Sichtbarkeit von der Vielzahl von Kameras bestimmt, und
dem Element ein Silhouettenbild zuordnet, das aus einem aufgenommenen Bild erhalten wird, das durch eine Kamera erhalten wird, bei der bestimmt wird, dass das Element sichtbar ist.

5. Informationsverarbeitungsvorrichtung nach Anspruch 3 oder 4, wobei die Erhalteeinrichtung die Zuordnung zwischen dem Element und dem Silhouettenbild basierend auf einer Zuordnung eines Silhouettenbildes in einem zu dem Element benachbarten Element ergänzt.

6. Informationsverarbeitungsvorrichtung nach einem der Ansprüche 1 bis 5, wobei die zweite Erzeugungseinrichtung eine dreidimensionale Form des bestimmten Objekts unter Verwendung eines Silhouettenbildes, das durch die dem bestimmten Objekt entsprechenden Zuordnungsinformationen zugeordnet ist, erhält und das virtuelle Blickpunktbild des bestimmten Objekts basierend auf der erhaltenen dreidimensionalen Form erzeugt.

7. Informationsverarbeitungsvorrichtung nach Anspruch 6, wobei die zweite Erzeugungseinrichtung
wenn das bestimmte Objekt zwei oder mehr Objekte sind, für jedes aufgenommene Bild eine logische Summensynthese von Silhouettenbildern, die den zwei oder mehr Objekten entsprechen, durchführt, und
das virtuelle Blickpunktbild unter Verwendung des durch die logische Summensynthese erhaltenen Silhouettenbildes erzeugt.

8. Informationsverarbeitungsvorrichtung nach Anspruch 6 oder 7, wobei die zweite Erzeugungseinrichtung
ein Silhouettenbild des bestimmten Objekts und ein Silhouettenbild eines Objekts, das in einer Verdeckungsbeziehung mit dem bestimmten Objekt steht, auf unterscheidbare Weise kombiniert, und
das virtuelle Blickpunktbild unter Verwendung des kombinierten Silhouettenbildes erzeugt.

9. Informationsverarbeitungsvorrichtung nach Anspruch 8, wobei das virtuelle Blickpunktbild, das aus dem Silhouettenbild des Objekts in der Verdeckungsbeziehung erzeugt wird, mit einer Helligkeit erzeugt wird, die sich von der des virtuellen Blickpunktbildes unterscheidet, das aus dem Silhouettenbild des bestimmten Objekts erzeugt wird.

10. Informationsverarbeitungsvorrichtung nach Anspruch 6, wobei die zweite Erzeugungseinrichtung
wenn das bestimmte Objekt zwei oder mehr Objekte sind, virtuelle Blickpunktbilder der zwei oder mehr Objekte jeweils unter Verwendung von Silhouettenbildern der zwei oder mehr Objekte erzeugt; und
die virtuellen Blickpunktbilder jedes der zwei oder mehr Objekte basierend auf einem Abstand zwischen dem bestimmten virtuellen Blickpunkt und jedem der zwei oder mehr Objekte kombiniert.

11. Informationsverarbeitungsvorrichtung nach einem der Ansprüche 3 bis 5, wobei die zweite Erzeugungseinrichtung das virtuelle Blickpunktbild des bestimmten Objekts basierend auf einer dreidimensionalen Form erzeugt, die erhalten wird, indem ein Element, das nicht dem Silhouettenbild zugeordnet ist, das dem bestimmten Objekt durch die Zuordnungsinformationen zugeordnet ist, aus einer Vielzahl von Elementen, die die dreidimensionale Form bilden, die basierend auf der Vielzahl von Silhouettenbildern erzeugt wird, gelöscht wird.

12. Informationsverarbeitungsvorrichtung nach einem der Ansprüche 1 bis 11, ferner umfassend eine Kombinationseinrichtung (214, S604) zum unterscheidbaren Kombinieren eines virtuellen Blickpunktbildes des bestimmten Objekts mit Differenzen zwischen allen virtuellen Blickpunktbildern der Vielzahl von Objekten, die unter Verwendung der Vielzahl von Silhouettenbildern erhalten werden, und dem virtuellen Blickpunktbild des bestimmten Objekts.

13. Informationsverarbeitungsvorrichtung nach einem der Ansprüche 1 bis 12, wobei die erste Erzeugungseinrichtung einen Bereich für jedes Objekt in jedem der Vielzahl von aufgenommenen Bildern trennt und das Silhouettenbild basierend auf dem getrennten Bereich des Objekts erzeugt.

14. Informationsverarbeitungsvorrichtung nach Anspruch 13, wobei die erste Erzeugungseinrichtung einen Bereich für jedes Objekt in jedem der Vielzahl von aufgenommenen Bildern durch Instanzsegmentierung trennt.

15. Informationsverarbeitungsvorrichtung nach einem der Ansprüche 1 bis 14, ferner umfassend eine Bestimmungseinrichtung (213) zum Bestimmen eines Objekts als ein Erzeugungsziel des virtuellen Blickpunktbildes aus der Vielzahl von Objekten gemäß einer Benutzeroperation.

16. Informationsverarbeitungsvorrichtung nach Anspruch 15, wobei die Bestimmungseinrichtung ein Objekt des Erzeugungsziels basierend auf einer Position bestimmt, die durch die Benutzeroperation auf einem Anzeigebildschirm, der eines der Vielzahl von aufgenommenen Bildern anzeigt, bestimmt wird.

17. Informationsverarbeitungsvorrichtung nach Anspruch 15, wobei die Bestimmungseinrichtung ein Objekt des Erzeugungsziels basierend auf einer Position bestimmt, die durch die Benutzeroperation auf einem Anzeigebildschirm, der ein durch die zweite Erzeugungseinrichtung erzeugtes virtuelles Blickpunktbild anzeigt, bestimmt wird.

18. Informationsverarbeitungsvorrichtung nach Anspruch 17, wobei eine Differenz zwischen einem virtuellen Blickpunktbild, das alle der Vielzahl von Objekten umfasst, und einem virtuellen Blickpunktbild des Objekts des Erzeugungsziels und das virtuelle Blickpunktbild des Objekts des Erzeugungsziels auf dem Anzeigebildschirm auf identifizierbare Weise angezeigt werden.

19. Informationsverarbeitungsvorrichtung nach Anspruch 15, wobei die Bestimmungseinrichtung als ein Objekt des Erzeugungsziels ein Objekt bestimmt, das zu einem vorbestimmten Zeitpunkt in einem spezifischen Bereich vorhanden ist, der durch die Benutzeroperation in Aufnahmebereichen der Vielzahl von Kameras bestimmt wird.

20. Informationsverarbeitungsvorrichtung nach einem der Ansprüche 15 bis 19, wobei die Bestimmungseinrichtung einen Bestimmungszustand des Objekts aufrechterhält, indem das durch die Benutzeroperation bestimmte Objekt verfolgt wird.

21. Informationsverarbeitungsverfahren, umfassend:
Erzeugen (211), aus einer Vielzahl von aufgenommenen Bildern, die durch eine Vielzahl von Kameras erhalten werden, einer Vielzahl von Silhouettenbildern, die jeweilige Bereiche einer Vielzahl von Objekten, die in der Vielzahl von aufgenommenen Bildern erscheinen, darstellen;
Erhalten (S401-S404), für jedes Objekt, von Zuordnungsinformationen, die ein diesem Objekt entsprechendes Silhouettenbild darstellen, durch Zuordnen der Vielzahl von Silhouettenbildern zu ihrem entsprechenden Objekt der Vielzahl von Objekten; und
Erzeugen (S601-S604) eines virtuellen Blickpunktbildes eines aus der Vielzahl von Objekten bestimmten Objekts, basierend auf den dem bestimmten Objekt entsprechenden Zuordnungsinformationen und einem bestimmten virtuellen Blickpunkt.

22. Computerprogramm, umfassend Anweisungen, die, wenn das Programm durch einen Computer ausgeführt wird, den Computer veranlassen, das Informationsverarbeitungsverfahren nach Anspruch 21 auszuführen.

## Revendications

1. Appareil de traitement d'informations comprenant :
un premier moyen de génération (211) pour la génération, à partir d'une pluralité d'images capturées obtenues par une pluralité d'appareils de prise de vues, d'une pluralité d'images de silhouette représentant des régions respectives d'une pluralité d'objets apparaissant dans la pluralité d'images capturées ;
un moyen d'obtention (212, S401-S404) pour l'obtention, pour chaque objet, d'informations d'association représentant une image de silhouette correspondant à cet objet par l'association de la pluralité d'images de silhouette avec leur objet de la pluralité d'objets ; et
un deuxième moyen de génération (214, S601-S604) pour la génération d'une image de point de vue virtuel d'un objet désigné parmi la pluralité d'objets, sur la base des informations d'association correspondant à l'objet désigné et d'un point de vue virtuel désigné.

2. Appareil de traitement d'informations selon la revendication 1, dans lequel le moyen d'obtention,
obtient une forme tridimensionnelle à l'aide de la pluralité d'images de silhouette, et
réalise une association pour chaque objet de la pluralité d'images de silhouette sur la base d'une zone de projection obtenue lorsque chacune de la pluralité d'images de silhouette est projetée sur la forme tridimensionnelle.

3. Appareil de traitement d'informations selon la revendication 2, dans lequel le moyen d'obtention associe une image de silhouette avec un élément présent dans la zone de projection de l'image de silhouette parmi une pluralité d'éléments constituant la forme tridimensionnelle, et réalise l'association des images de silhouette sur la base d'un résultat de l'association de l'image de silhouette dans chacun de la pluralité d'éléments.

4. Appareil de traitement d'informations selon la revendication 3, dans lequel le moyen d'obtention :
détermine, pour la pluralité d'éléments, une visibilité depuis la pluralité d'appareils de prise de vues, et
associe une image de silhouette, obtenue à partir d'une image capturée obtenue par un appareil de prise de vues dans laquelle l'élément est déterminé comme étant visible, avec l'élément.

5. Appareil de traitement d'informations selon la revendication 3 ou 4, dans lequel le moyen d'obtention complète l'association entre l'élément et l'image de silhouette sur la base de l'association d'une image de silhouette dans un élément adjacent à l'élément.

6. Appareil de traitement d'informations selon l'une quelconque des revendications 1 à 5, dans lequel le deuxième moyen de génération obtient une forme tridimensionnelle de l'objet désigné à l'aide d'une image de silhouette associée par les informations d'association correspondant à l'objet désigné, et génère l'image de point de vue virtuel de l'objet désigné sur la base de la forme tridimensionnelle obtenue.

7. Appareil de traitement d'informations selon la revendication 6, dans lequel le deuxième moyen de génération,
réalise, lorsque l'objet désigné est deux objets ou plus, une synthèse de somme logique d'images de silhouette correspondant aux deux objets ou plus pour chaque image capturée, et
génère l'image du point de vue virtuel à l'aide de l'image de silhouette obtenue par la synthèse de somme logique.

8. Appareil de traitement d'informations selon la revendication 6 ou 7, dans lequel
le deuxième moyen de génération,
combine une image de silhouette de l'objet désigné et une image de silhouette d'un objet dans une relation d'occlusion avec l'objet désigné d'une manière reconnaissable, et
génère l'image du point de vue virtuel à l'aide de l'image de silhouette combinée.

9. Appareil de traitement d'informations selon la revendication 8, dans lequel l'image de point de vue virtuel générée à partir de l'image de silhouette de l'objet dans la relation d'occlusion est générée avec une luminosité différente de l'image de point de vue virtuel générée à partir de l'image de silhouette de l'objet désigné.

10. Appareil de traitement d'informations selon la revendication 6, dans lequel
le deuxième moyen de génération
génère, lorsque l'objet désigné est deux objets ou plus, des images de point de vue virtuel des deux objets ou plus à l'aide d'images de silhouette des deux objets ou plus, respectivement ; et
combine les images de point de vue virtuel de chacun des deux objets ou plus sur la base d'une distance entre le point de vue virtuel désigné et chacun des deux objets ou plus.

11. Appareil de traitement d'informations selon l'une quelconque des revendications 3 à 5, dans lequel le deuxième moyen de génération génère l'image de point de vue virtuel de l'objet désigné sur la base d'une forme tridimensionnelle obtenue par la suppression d'un élément non associé à l'image de silhouette associée à l'objet désigné par les informations d'association à partir d'une pluralité d'éléments constituant la forme tridimensionnelle générée sur la base de la pluralité d'images de silhouette.

12. Appareil de traitement d'informations selon l'une quelconque des revendications 1 à 11, comprenant en outre un moyen de combinaison (214, S604) pour la combinaison, de manière reconnaissable, d'une image de point de vue virtuel de l'objet désigné et de différences entre la totalité des images de point de vue virtuel de la pluralité d'objets obtenues à l'aide de la pluralité d'images de silhouette et de l'image de point de vue virtuel de l'objet désigné.

13. Appareil de traitement d'informations selon l'une quelconque des revendications 1 à 12, dans lequel le premier moyen de génération sépare une région pour chaque objet dans chacune de la pluralité d'images capturées, et génère l'image de silhouette sur la base de la région séparée de l'objet.

14. Appareil de traitement d'informations selon la revendication 13, dans lequel le premier moyen de génération sépare une région pour chaque objet dans chacune de la pluralité d'images capturées par une segmentation d'instance.

15. Appareil de traitement d'informations selon l'une quelconque des revendications 1 à 14, comprenant en outre un moyen de désignation (213) pour la désignation d'un objet comme étant une cible de génération de l'image de point de vue virtuel parmi la pluralité d'objets conformément à une opération d'utilisateur.

16. Appareil de traitement d'informations selon la revendication 15, dans lequel le moyen de désignation détermine un objet de la cible de génération sur la base d'une position désignée par l'opération d'utilisateur sur un écran d'affichage qui affiche une image capturée de la pluralité d'images capturées.

17. Appareil de traitement d'informations selon la revendication 15, dans lequel le moyen de désignation détermine un objet de la cible de génération sur la base d'une position désignée par l'opération d'utilisateur sur un écran d'affichage qui affiche une image de point de vue virtuel générée par le deuxième moyen de génération.

18. Appareil de traitement d'informations selon la revendication 17, dans lequel une différence entre une image de point de vue virtuel incluant la totalité de la pluralité d'objets et une image de point de vue virtuel de l'objet de la cible de génération, et l'image de point de vue virtuel de l'objet de la cible de génération affichée sur l'écran d'affichage d'une manière identifiable.

19. Appareil de traitement d'informations selon la revendication 15, dans lequel le moyen de désignation détermine, comme étant un objet de la cible de génération, un objet présent à un instant prédéterminé dans une région spécifique désignée par l'opération d'utilisateur dans des régions de photographie de la pluralité d'appareils de prise de vues.

20. Appareil de traitement d'informations selon l'une quelconque des revendications 15 à 19, dans lequel le moyen de désignation conserve un état désigné de l'objet par le suivi de l'objet désigné par l'opération d'utilisateur.

21. Procédé de traitement d'informations comprenant :
la génération (211), à partir d'une pluralité d'images capturées obtenues par une pluralité d'appareils de prise de vues, d'une pluralité d'images de silhouette représentant des régions respectives d'une pluralité d'objets apparaissant dans la pluralité d'images capturées ;
l'obtention (S401-S404), pour chaque objet, d'informations d'association représentant une image de silhouette correspondant à cet objet par l'association de la pluralité d'images de silhouette avec leur objet correspondant de la pluralité d'objets ; et
la génération (S601-S604) d'une image de point de vue virtuel d'un objet désigné parmi la pluralité d'objets, sur la base des informations d'association correspondant à l'objet désigné et d'un point de vue virtuel désigné.

22. Programme d'ordinateur comprenant des instructions qui, lorsque le programme est exécuté par un ordinateur, amènent l'ordinateur à exécuter le procédé de traitement d'informations selon la revendication 21.
